# EUROPÄISCHE PATENTSCHRIFT

(11) **EP 3 934 782 B1**
(45) Veröffentlichungstag und Bekanntmachung des Hinweises auf die Patenterteilung: **07.06.2023**
(21) Anmeldenummer: 20708398.1
(22) Anmeldetag: 06.02.2020
(51) Int. Cl.: B01D 24/12, B01D 24/46, B01D 29/35, B01D 29/64

(54) **FILTERANLAGE ZUR BEHANDLUNG VON VERUNREINIGTEN FLÜSSIGKEITEN**
FILTER SYSTEM FOR TREATING CONTAMINATED LIQUIDS
DISPOSITIF FILTRANT POUR LE TRAITEMENT DE LIQUIDES POLLUÉS

(30) Priorität: 06.02.2019 AT 500902019
(43) Veröffentlichungstag der Anmeldung: 12.01.2022
(73) Patentinhaber: Sonnek Engineering GmbH, 1050 Wien (AT)
(72) Erfinder: WIESENEDER, Werner, 1050 Wien (AT); LUTZ, Peter, 2103 Langenzersdorf (AT)
(74) Vertreter: Müllner, Martin
(86) Internationale Anmeldenummer: PCT/AT2020/060032
(87) Internationale Veröffentlichungsnummer: WO 2020/160583

(56) Entgegenhaltungen:
- CN-B- 103 055 556
- CN-Y- 201 320 423

## Beschreibung

### Technisches Gebiet

Die vorliegende Erfindung betrifft eine Filteranlage zur Behandlung von verunreinigten Flüssigkeiten, insbesondere von verunreinigtem Wasser wie z.B. Lagerstättenwasser, das in der Erdölindustrie aufbereitet wird, mit einem Filterbehälter, in dem ein Filterbett mit Filtergranulat als Filtermaterial vorgesehen ist, über dem ein Rückhalteelement für das Filtermaterial vorgesehen ist.

### Stand der Technik

Bei der Erdölgewinnung fällt Lagerstättenwasser an, das üblicherweise an anderer Stelle wieder verpresst wird. Dazu muss das Lagerstättenwasser zuvor aufbereitet, insbesondere filtriert, werden. Dazu dient ein Schüttschichtfilter mit Filtergranulat (z.B. Filtersand, Anthrazit, Aktivkohle, Glas, Nussschalen, etc.) als Filtermedium, ähnlich wie bei Schwimmbadfiltern. Unterschiedlich ist allerdings die Korngröße, die bei Schwimmbadfiltern wesentlich höher ist. Bei Filteranlagen für Lagerstättenwasser beträgt die Korngröße des Filtergranulats häufig weniger als 0,5 mm, damit auch Feinstteilchen zurückgehalten werden bzw. werden Filtermedien verwendet, die ein geringes spezifisches Gewicht haben wie z.B. Aktivkohle oder Nussschalengranulat.

Solche Schüttschichtfilter mit Filtergranulat als Filtermedium müssen regelmäßig rückgespült werden. Das Rückspülen ist bei Schwimmbadfiltern relativ leicht möglich, weil auf Grund der hohen Korngröße und gleichzeitig hohem spezifischem Gewicht des Sandkorns kaum Material mitgerissen wird.

Aus der DE4142612 ist bekannt, über dem Filtergranulat ein Rückhalteelement für das Filtermaterial vorzusehen. Dieses Rückhalteelement erstreckt sich über den gesamten Querschnitt des Filterbehälters und verhindert, dass Filtermaterial beim Rückspülen ausgetragen wird.

Diese Lösung mag für grobes Filtermaterial geeignet sein, bei feinem oder leichtem Filtermaterial, wie es zum Beispiel zum Reinigen von Lagerstättenwasser verwendet wird, neigt das Rückhalteelement aber dazu, zu verstopfen. Im Falle einer Verstopfung muss der Filterbehälter zerlegt, das Rückhalteelement ausgebaut und gereinigt werden, wonach man das Rückhalteelement wieder einbauen und den Filterbehälter wieder zusammenbauen muss. Solche Betriebsunterbrechungen sollten natürlich nur in Ausnahmefällen auftreten.

Eine weitere Filteranlage mit einem Rückhaltelement für das Filtergranulat ist in CN 103055556 offenbart. Die zylindrischen Rückhaltesiebe sind dabei vertikal angeordnet und befinden sich zumindest teilweise außerhalb des Filterbehälters.

Bei Schüttschichtfiltern für Lagerstättenwasser wird beim Rückspülen relativ viel Material mitgerissen. Das liegt einerseits daran, dass die Korngröße geringer ist:
kleinere Teilchen werden leichter mitgerissen. Das liegt weiters daran, dass teilweise sehr leichtes Filtergranulat verwendet wird (z.B. Aktivkohle, Anthrazit oder Nussschalengranulat). Das liegt weiters daran, dass Öl an den Körnern adsorbiert ist, und Öl leichter als Wasser ist; Körner, die Öl adsorbiert haben, schwimmen also leichter auf. Und schließlich liegt das daran, dass die notwendige Geschwindigkeit des Rückspülmediums (entweder ein Gas/Wassergemisch oder nur Wasser) höher ist, sie beträgt oft mehr als 40 m/h. (Zuvor wird normalerweise Gas eingeblasen, um das Filtermedium aufzulockern.) Geringere Geschwindigkeiten des Rückspülmediums sind zwar möglich, aber dann leidet die Effizienz des Rückspülens. Dadurch kommt es häufig zu überhöhtem Differenzdruck im Filterbehälter

### Darstellung der Erfindung

Es ist Aufgabe der vorliegenden Erfindung, eine Filteranlage der eingangs genannten Art derart weiterzubilden, dass Betriebsunterbrechungen durch überhöhten Differenzdruck vermieden bzw. möglichst kurz gehalten werden können.

Diese Aufgabe wird gelöst durch eine Filteranlage gemäß Anspruch 1.

Erfindungsgemäß ist also ein Rückhalteelement (Sieb) vorgesehen, das z.B. als vertikal angeordneter Zylinder ausgebildet ist. Solche Rückhaltesysteme dienen üblicherweise der Reinigung von Flüssigkeiten: Schmutzpartikel sollen zurückgehalten werden und nur sauberes Medium soll durchgehen.

Die Aufgabe gemäß der vorliegenden Erfindung ist jedoch anders: hier sollen die Schmutzpartikel durchgehen und nur das Filtergranulat zurückgehalten werden.

Bei der erfindungsgemäßen Anordnung ist eine Reinigung möglich, ohne dass der Filterbehälter selbst zerlegt werden muss, und die Reinigung kann auch einfach automatisiert werden, wie im Folgenden noch beschrieben wird.

Damit das Filtermaterial leicht nach unten fallen kann und dadurch weniger schnell das Rückhalteelement verlegt, ist es günstig, wenn die Strömung in den Hohlraum möglichst von oben nach unten erfolgt. Es ist daher nach der Erfindung vorgesehen, dass ein Kanal vom Filterbehälter zum Kopfraum des Filtersiebs vorgesehen ist, und dass optional ein Turbinenflügel an einer Welle vorgesehen ist, der mittels eines Antriebs innerhalb des Filtersiebs drehbar ist. Durch die Anordnung von mindestens einem Turbinenflügel kann durch Drehung der Welle mittels des Antriebs eine Druckdifferenz erzeugt werden, und dadurch kann sich eine vertikale Strömung ausbilden. Die Rückspülflüssigkeit wird daher durch den Kanal in den Kopfraum des Hohlraums strömen, von wo sie dann im Hohlraum nach unten und in weiterer Folge radial das Filtersieb nach außen durchströmt. Dadurch kann das Filtermaterial relativ leicht nach unten aus dem Filtersieb sinken und in das Filterbett zurückfallen. Durch die Strömung, die von dem mindestens einen Turbinenflügel erzeugt wird, ist gleichzeitig ein Reinigungssystem für das Filtersieb geschaffen. Die Abreinigung erfolgt durch erzeugte erzwungene starke Überströmung des Filtersiebs.

Nach einer Ausgestaltung der Erfindung ist eine Dissolverscheibe oder ein Rührwerk am Ender der Welle vorgesehen. Die Dissolverscheibe oder das Rührwerk gewährleistet eine Flexibilität der Betriebsweise der gesamten Filtereinheit und verbessert eine Strömungsausbildung im Rückhalteelement. Die Position der Dissolverscheibe oder des Rührwerks kann je nach gewünschtem Filtermedium durch Verlängerung oder Verkürzung der Welle festgelegt werden.

Nach einer alternativen Ausgestaltung der Erfindung ist vorgesehen, dass an den unten offenen Hohlraum ein Trichter anschließt und dass ein Kanal vom Filterbehälter zum Kopfraum des Filtersiebs vorgesehen ist, dessen Querschnitt größer als der Querschnitt der Trichteröffnung ist. Da sich ein Trichter verjüngt, also unten einen relativ geringen Querschnitt hat, wird die Strömung von Rückspülflüssigkeit in den Hohlraum durch den Trichter gedrosselt, welche Strömung im Hohlraum eine nach oben gerichtete Vertikalkomponente hätte, sodass das Filtermaterial lange in Schwebe gehalten würde. Die Rückspülflüssigkeit wird daher auch in diesem Fall bevorzugt durch den Kanal in den Kopfraum des Hohlraums strömen, von wo sie dann im Hohlraum nach unten und in weiterer Folge radial das Filtersieb nach außen durchströmt. Dadurch kann das Filtermaterial relativ leicht nach unten aus dem Filterelement sinken und in das Filterbett zurückfallen.

In diesem Fall kann das Reinigungssystem mechanisch sein, indem man zumindest einen Schaber vorsieht, der mittels eines Antriebs an der Innenseite des Filtersiebs entlang bewegbar ist, oder es kann hydraulisch/pneumatisch sein, indem man zumindest eine Hochdruckdüse zur Ausgabe eines Hochdruck-Fluidstrahls an die Innenseite des Filtersiebs vorsieht.

### Kurze Beschreibung der Zeichnungen

Anhand der beiliegenden Zeichnungen wird die vorliegende Erfindung näher erläutert. Fig. 1 zeigt einen Querschnitt durch eine erste Ausführungsform einer erfindungsgemäßen Filteranlage, und Fig. 2 zeigt das Rückhalteelement davon in vergrößertem Maßstab; Fig. 3 zeigt eine zweite Ausführungsform einer erfindungsgemäßen Filteranlage, und Fig. 4 zeigt das Rückhalteelement davon in vergrößertem Maßstab.

### Weg(e) zur Ausführung der Erfindung

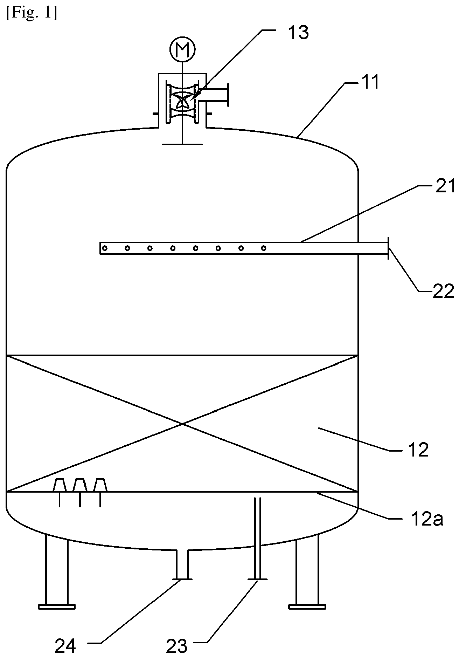

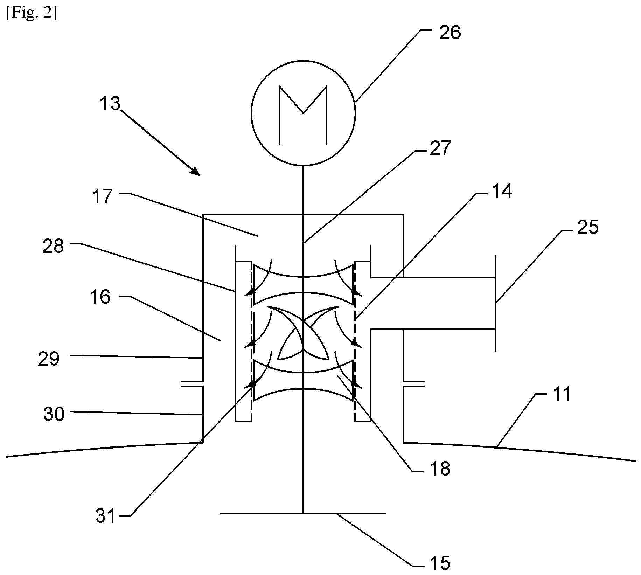

Die Filteranlage gemäß den Fig. 1 und 2 weist einen Filterbehälter 11 auf, in dem ein Filterbett 12 auf einem Düsenboden 12a aufgebracht ist. Über dem Filterbett 12 befindet sich eine Verteileinrichtung 21, über die die zu filtrierende Flüssigkeit von einer Eintrittsöffnung 22 über das Filterbett 12 verteilt werden kann. Die Flüssigkeit fließt durch das Filterbett 12 und den Düsenboden 12a zu einer Austrittsöffnung 24 am tiefsten Punkt des Filterbehälters 11.

Zum Rückspülen des Filters ist eine Rückspülgas-Eintrittsöffnung 23 vorgesehen, über die ein Rückspülgas eingebracht werden kann, die Rückspülflüssigkeit wird über die Austrittsöffnung 24 zugeführt. Normalerweise wird zunächst mit Rückspülgas das Filterbett 12 aufgelockert, wonach Rückspülflüssigkeit - gegebenenfalls zusammen mit Rückspülgas - in das Filterbett eingebracht wird.

Bei herkömmlichen Filteranlagen wird die Rückspülflüssigkeit meist über die Eintrittsöffnung 22 ausgebracht, was aber den Nachteil hat, dass Filtermaterial mit ausgetragen wird, insbesondere bei hohem Durchsatz von Rückspülflüssigkeit, der erwünscht ist, um das Filterbett 12 effizient zu reinigen.

Um diesen Nachteil zu beseitigen, ist erfindungsgemäß ein Rückhalteelement 13 vorgesehen. Dieses Rückhalteelement 13 befindet sich im obersten Bereich des Filterbehälters 11, teilweise innerhalb und teilweise außerhalb des Filterbehälters 11. Es besteht im Wesentlichen aus einem Filtersieb 14, das die Form eines Zylindermantels hat. Dieses Filtersieb 14 befindet sich in einem Rohr 28, sodass zwischen dem Rohr 28 und dem Filtersieb 14 ein Ringraum verbleibt. Dieser Ringraum ist oben und unten abgeschlossen und steht mit einer Rückspülflüssigkeits-Austrittsöffnung 25 in Verbindung.

Das Rohr 28 ist von einem Außenrohr 29 umgeben, welches mit einem Rohrstutzen 30 des Filterbehälters 11 dicht verbunden ist. Somit gibt es einen weiteren Ringraum zwischen dem Rohr 28 und dem Außenrohr 29 bzw. dem Rohrstutzen 30, der einen Kanal 16 für die Zufuhr der Rückspülflüssigkeit in den Kopfraum 17 des Rückhalteelements 13 bildet. Der Kopfraum 17 verbindet den Kanal 16 mit dem Inneren des Filtersiebs 14, der Ringraum zwischen dem Rohr 28 und dem Filtersieb 14 ist aber dagegen abgetrennt.

Das Rückhalteelement funktioniert wie folgt:
Bei der Rückspülung wird Wasser von unten über die Austrittsöffnung 24 in den Filterbehälter 11 gepumpt, durchströmt dabei das Filterbett 12, löst dabei Schmutzstoffe (Feststoffe, Öl, etc.) und bringt diese nach oben.

Der Vorgang wird mit höherer Rückspülgeschwindigkeit (m³/m²·h) effizienter, bringt aber bei herkömmlichen Filtern das Risiko eines Filtermaterialaustrags mit sich.

Um dieses Risiko zu vermeiden, wird bei der erfindungsgemäßen Filteranlage das Rückspülwasser in den Kanal 16 und von dort über den Kopfraum 17 in das Innere des Filtersiebs 14 geleitet.

Im Inneren des Filtersiebs 14 befindet sich eine Welle 27 mit Turbinenflügeln 18, die durch einen Antrieb 26 in Drehung versetzt werden kann. Während des Rückspülens schaltet man den Antrieb 26 ein, und die Turbinenflügel 18 erzeugen innerhalb des Filtersiebs 14 eine gewünschte Strömung und Abreibungseffekte am Filtersieb 14. Damit ergibt sich während des Rückspülvorgangs eine durch Pfeile angedeutete Hauptströmung 31, sodass sich im Inneren des Filtersiebs 14 eine Strömung ergibt, deren Vertikalkomponente nach unten gerichtet ist. Das Rückspülwasser durchfließt dann das Filtersieb 14, dessen Maschenweite in Abhängigkeit der Korngröße des Filtermediums gewählt werden kann, von innen nach außen und gelangt schließlich zur Rückspülflüssigkeits-Austrittsöffnung 25, wo das Rückspülwasser mit den Schmutzstoffen ausgeschleust wird. Da die Vertikalkomponente der Strömung im Inneren des Filtersiebs, begünstigt durch die vertikal angeordneten Turbinenflügel 18, nach unten gerichtet ist, wird mitgeführtes Filtergranulat zu einem erheblichen Teil bereits während des Rückspülens in Richtung des Filterbetts 12 gespült und gelangt gar nicht erst zum Filtersieb 14. Die gewünschte Strömung innerhalb des Filtersiebs 14 und somit auch im Filterbehälter 11 kann mittels einer Dissolverscheibe oder einem Rührwerk 15 am Ende der Welle 27 beeinflusst werden. Die Position der Dissolverscheibe oder des Rührwerks 15 kann je nach Filtermedium definiert werden.

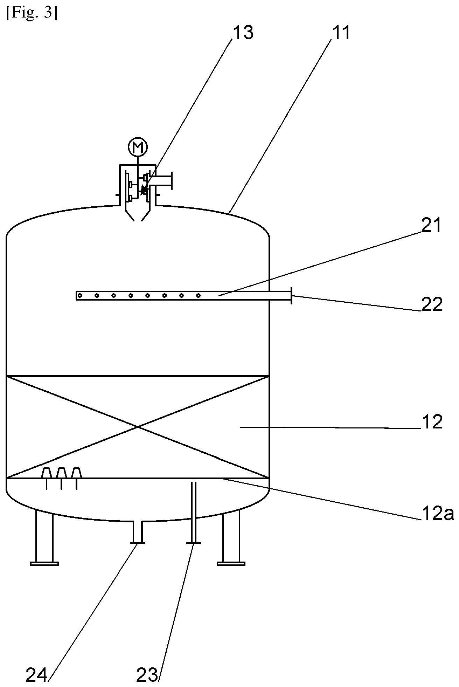

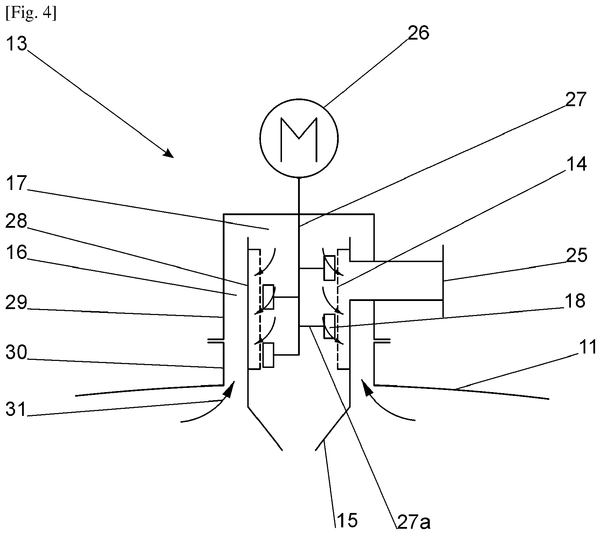

Die Filteranlage gemäß den Fig. 3 und 4 unterscheidet sich von der eben beschriebenen Filteranlage dadurch, dass das Filtersieb 14 unten einen Trichter 15' aufweist und dass keine Turbinenflügel zur Erzeugung einer Zwangsströmung vorgesehen sind. Die Neigung der Wand des Trichters 15' ist so steil, dass Filtermaterial nicht darauf liegen bleiben kann. Bei dieser Ausführung fließt das Rückspülwasser zwar zum Teil auch durch die Öffnung des Trichters 15' in das Innere des Filtersiebs 14, jedoch kann dieser Anteil gering gehalten werden, wenn man den Querschnitt des Kanals 16 deutlich größer dimensioniert als den Querschnitt der Öffnung des Trichters 15'. Damit bildet sich auch in diesem Fall eine Hauptströmung 31 aus, deren Vertikalkomponente zumindest großteils nach unten gerichtet ist, sodass auch in diesem Fall mitgeführtes Filtergranulat zu einem erheblichen Teil bereits während des Rückspülens in Richtung des Filterbetts 12 gespült wird und gar nicht erst zum Filtersieb 14 gelangt.

Dennoch neigt das Filtersieb 14 dazu, zu verstopfen. Aus diesem Grund ist innerhalb des Filtersiebs 14 eine durch einen Antrieb 26, insbesondere durch einen Elektromotor, angetriebene Welle 27 vorgesehen, die radial abstehende Arme 27a aufweist, an denen jeweils ein Schaber 18' angebracht ist, der am Filtersieb 14 entlanggleitet. Während des Rückspülens oder auch nur danach schaltet man den Antrieb 26 ein, und die Schaber 18' reinigen das Filtersieb 14.

Die Reinigung des Filtersiebs 14 kann auch hydraulisch erfolgen, insbesondere mit einem Wasserstrahl.

Das zurückgehaltene Filtermaterial fällt spätestens nach der Rückspülung über den Trichter 15' am unteren Ende des Filtersiebs 14 wieder in den Filterbehälter 11.

## Patentansprüche

1. Filteranlage zur Behandlung von verunreinigten Flüssigkeiten, insbesondere von verunreinigtem Wasser wie z.B. Lagerstättenwasser, das in der Erdölindustrie aufbereitet wird, mit einem Filterbehälter (11), in dem ein Filterbett (12) mit Filtergranulat als Filtermaterial vorgesehen ist und der oben einen Rohrstutzen (30) aufweist, in dem ein Rückhalteelement (13) für das Filtermaterial vorgesehen ist, welches ein im Wesentlichen vertikal angeordnetes Filtersieb (14) ist, das zumindest teilweise außerhalb des Filterbehälters (11) angeordnet ist und einen Hohlraum umschließt, **dadurch gekennzeichnet, dass** das Rückhalteelement (13) beim Rückspülen von innen nach außen durchströmbar ist, dass der Hohlraum unten offen ist, dass sich das Filtersieb (14) in einem Rohr (28) befindet, sodass zwischen dem Rohr (28) und dem Filtersieb (14) ein Ringraum verbleibt, der oben und unten abgeschlossen ist und mit einer Rückspülflüssigkeits-Austrittsöffnung (25) in Verbindung steht, dass das Rohr (28) von einem Außenrohr (29) umgeben ist, welches mit dem Rohrstutzen (30) dicht verbunden ist, sodass es einen weiteren Ringraum zwischen dem Rohr (28) und dem Außenrohr (29) bzw. dem Rohrstutzen (30) gibt, der einen Kanal (16) für die Zufuhr der Rückspülflüssigkeit in einen Kopfraum (17) des Rückhalteelements (13) bildet, welcher Kopfraum (17) den Kanal (16) mit dem Inneren des Filtersiebs (14) verbindet, wogegen der Ringraum zwischen dem Rohr (28) und dem Filtersieb (14) dagegen abgetrennt ist, sodass zurückgehaltenes Filtermaterial in das Filterbett (12) zurückfällt.

2. Filteranlage nach Anspruch 1, **dadurch gekennzeichnet, dass** ein Reinigungssystem für das Filtersieb (14) vorgesehen ist.

3. Filteranlage nach Anspruch 2, **dadurch gekennzeichnet, dass** zumindest ein Turbinenflügel (18) an einer Welle (27) vorgesehen ist, der mittels eines Antriebs (26) innerhalb des Filtersiebs (14) drehbar ist.

4. Filteranlage nach Anspruch 3, **dadurch gekennzeichnet, dass** am Ende der Welle (27) eine Dissolverscheibe oder ein Rührwerk (15) vorgesehen ist.

5. Filteranlage nach Anspruch 1 oder 2, **dadurch gekennzeichnet, dass** an den unten offenen Hohlraum ein Trichter (15') anschließt und dass der Querschnitt des Kanals (16) größer als der Querschnitt der Trichteröffnung ist.

6. Filteranlage nach Anspruch 2 und 5, **dadurch gekennzeichnet, dass** zumindest ein Schaber (18') vorgesehen ist, der mittels eines Antriebs (26) an der Innenseite des Filtersiebs (14) entlang bewegbar ist.

7. Filteranlage nach Anspruch 2 und 5, **dadurch gekennzeichnet, dass** zumindest eine Hochdruckdüse zur Ausgabe eines Hochdruck-Fluidstrahls an die Innenseite des Filtersiebs (14) vorgesehen ist.

## Claims

1. A filter system for the treatment of contaminated liquids, in particular contaminated water such as interstitial water, which is treated in the oil industry, having a filter container (11) in which a filter bed (12) with filter granulate as filter material is provided and which has a pipe socket (30) at the top, in which a retaining member (13) for the filter material is provided, which is an substantially vertically arranged filter screen (14) which is at least partially arranged outside the filter container (11) and encloses a hollow cavity, **characterized in that** the retaining member (13) can be traversed from the inside to the outside during backwashing, **that** the cavity is open at the bottom, that the filter screen (14) is located in a tube (28) such that between the tube (28) and the filter screen (14) an annular space remains which is closed at the top and at the bottom and communicates with a backwash liquid outlet opening (25), that the tube (28) is surrounded by an outer tube (29) which is connected to the pipe socket (30) in a sealed manner such that there is another annular space between the tube (28) and the outer tube (29) and the pipe socket (30), respectively, which forms a channel (16) for feeding the backwashing liquid into a head space (17) of the retaining member (13), which head space (17) connects the channel (16) with the interior of the filter screen (14), whereas the annular space between the pipe (28) and the filter screen (14), on the other hand, is separated, such that retained filter material falls back into the filter bed (12).

2. The filter system according to claim 1, **characterized in that** a cleaning system for the filter screen (14) is provided.

3. The filter system according to claim 2, **characterized in that** on a shaft (27) at least one turbine blade (18) is provided which is rotatable by means of a drive (26) within the filter screen (14).

4. The filter system according to claim 3, **characterized in that** a dissolver disc or an agitator (15) is provided at the end of the shaft (27).

5. The filter system according to claim 1 or 2, **characterized in that** a funnel (15') adjoins the cavity which is open at the bottom and **that** the cross section of the channel (16) is bigger than the cross section of the funnel opening.

6. The filter system according to claim 2 and 5, **characterized in that** at least one scraper (18') is provided which is movable by means of a drive (26) along the inside of the filter screen (14).

7. The filter system according to claim 2 and 5, **characterized in that** at least one high pressure nozzle is provided for outputting a high pressure fluid jet to the inside of the filter screen (14).

## Revendications

1. Installation de filtrage qui est destinée à traiter des liquides pollués, notamment de l'eau polluée telle que, par exemple, de l'eau interstitielle qui est traitée dans l'industrie pétrolière, et qui comporte un boîtier à filtre (11) dans lequel est placé un lit de filtrage (12) renfermant des granulés filtrants servant de matériau filtrant et lequel est pourvu, dans sa partie supérieure, d'un embout tubulaire (30) dans lequel est placé un élément (13) permettant de retenir ledit matériau filtrant, s'agissant d'un tamis filtrant (14) qui présente une orientation sensiblement verticale, qui est disposé au moins partiellement à l'extérieur du boîtier à filtre (11) et qui renferme une cavité, **caractérisée en ce que,** lors d'un rinçage inversé, le flux peut traverser l'élément de rétention (13) de l'intérieur vers l'extérieur, **que** ladite cavité s'ouvre vers le bas, que le tamis filtrant (14) se trouve dans un tuyau (28), faisant en sorte qu'un espace annulaire demeure entre le tuyau (28) et le tamis filtrant (14) tout en étant fermé vers le haut et le bas et étant en communication avec une sortie (25) de liquide destiné au rinçage inversé, que le tuyau (28) est entouré d'un tuyau extérieur (29) qui est raccordé à l'embout tubulaire (30) de manière étanche, faisant en sorte qu'il existe, entre le tuyau (28) et le tuyau extérieur (29) et/ou l'embout tubulaire (30), un autre espace annulaire qui forme un canal (16) permettant d'envoyer le liquide destiné au rinçage inversé dans un espace de tête (17) de l'élément de rétention (13), cet espace de tête (17) reliant le canal (16) et l'intérieur du tamis filtrant (14) alors que ledit espace annulaire entre le tuyau (28 ) et le tamis filtrant (14) en est séparé, faisant en sorte que le matériau filtrant retenu retombe dans le lit de filtrage (12).

2. Installation de filtrage selon la revendication 1, **caractérisée en ce qu'**elle est pourvue d'un système permettant de nettoyer le tamis filtrant (14).

3. Installation de filtrage selon la revendication 2, **caractérisée en ce qu'**un arbre (27) est pourvu d'au moins une pale de turbine (18) qui peut être mise en rotation au sein du tamis filtrant (14) par un dispositif d'entraînement (26).

4. Installation de filtrage selon la revendication 3, **caractérisée en ce que** l'extrémité de l'arbre (27) est pourvue d'un disque de dispersion ou d'un organe d'agitation (15).

5. Installation de filtrage selon les revendications 1 ou 2, **caractérisée en ce qu'**elle comporte, dans la prolongation de la cavité s'ouvrant vers le bas, un entonnoir (15') et que la section transversale du canal (16) est supérieure à la section transversale de l'ouverture de l'entonnoir.

6. Installation de filtrage selon les revendications 2 et 5, **caractérisée en ce qu'**elle est pourvue d'au moins un racleur (18') qui peut être mis en mouvement, au moyen d'un dispositif d'entraînement (26), le long de la face intérieure du tamis filtrant (14).

7. Installation de filtrage selon les revendications 2 et 5, **caractérisée en ce qu'**elle est pourvue d'une buse haute pression permettant d'émettre un jet de fluide sous haute pression qui vise la face intérieure du tamis filtrant (14) .
